(19) Europäisches Patentamt
European Patent Office
Office européen des brevets

(11) Veröffentlichungsnummer: **0 324 943 B1**

(12) **EUROPÄISCHE PATENTSCHRIFT**

(45) Veröffentlichungstag der Patentschrift: **22.07.92**

(51) Int. Cl.[5]: **C09B 41/00**, C09B 35/46, C09D 11/00

(21) Anmeldenummer: **88120692.4**

(22) Anmeldetag: **10.12.88**

(54) **Wasserlösliche schwarze Trisazofarbstoffe.**

(30) Priorität: **22.12.87 DE 3743527**

(43) Veröffentlichungstag der Anmeldung:
**26.07.89 Patentblatt 89/30**

(45) Bekanntmachung des Hinweises auf die Patenterteilung:
**22.07.92 Patentblatt 92/30**

(84) Benannte Vertragsstaaten:
**CH DE ES FR GB IT LI**

(56) Entgegenhaltungen:
**FR-A- 2 272 148**
**FR-A- 2 272 149**

(73) Patentinhaber: **CASSELLA Aktiengesellschaft**
**Hanauer Landstrasse 526**
**W-6000 Frankfurt am Main 61(DE)**

(72) Erfinder: **Bauer, Wolfgang, Dr.**
**Masurenstrasse 6**
**W-6457 Maintal 3(DE)**
Erfinder: **Morgenroth, Konstantin, Dr.**
**Büchertalstrasse 4**
**W-6457 Maintal 3(DE)**
Erfinder: **Reh, Kuno, Dr.**
**Lauterbacher Strasse 14**
**W-6000 Frankfurt am Main 61(DE)**
Erfinder: **Ritter, Josef, Dr.**
**Berliner Strasse 12**
**W-6238 Hofheim(DE)**

(74) Vertreter: **Urbach, Hans-Georg, Dr. et al**
**Hanauer Landstrasse 526**
**W-6000 Frankfurt am Main 61(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die vorliegende Erfindung betrifft wasserlösliche schwarze Trisazofarbstoffe der allgemeinen Formel I

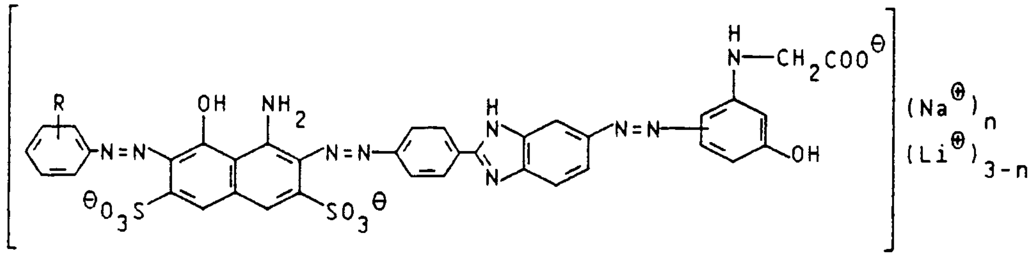

(I)

worin

R Wasserstoff, Alkyl mit 1 oder 2 Kohlenstoffatomen, Alkoxy mit 1 oder 2 Kohlenstoffatomen, Acylamino mit 2 oder 3 Kohlenstoffatomen oder Carbonamid und

n eine Zahl von 0 bis 2,5 bedeutet.

Die Erfindung betrifft ferner Verfahren zur Herstellung der Farbstoffe der allgemeinen Formel I und ihre Verwendung zur Herstellung von Aufzeichnungsflüssigkeiten, insbesondere für das Tintenstrahl-Druckverfahren, sowie diese Aufzeichnungsflüssigkeiten.

Aufzeichnungsflüssigkeiten oder Schreibflüssigkeiten werden auch als Tinten bezeichnet. Sie werden beispielsweise in Tintenkugelschreibern, Faserschreibern, Füllfederhaltern, in Druck-, Markierungs-, Schreib-, Zeichen- und Registriervorrichtungen oder bei dem sogenannten Tintenstrahl-Druckverfahren verwendet.

Das Tintenstrahl-Druckverfahren, englisch: ink jet printing, ist z.B. beschrieben in: Ullmanns Encyklopädie der Technischen Chemie: 4. Auflage, Bd.23, (1983), 262-264, und Kirk-Othmer Encyclopedia of Chemical Technology, 3rd Edition, Vol 20, (1982), 153-156. Es stellt ein berührungsloses Druckverfahren dar, bei dem Tröpfchen einer Schreibflüssigkeit aus einer Düse oder mehreren Düsen auf die zu bedruckende Unterlage gespritzt werden.

Eine Aufzeichnungsflüssigkeit besteht im Prinzip aus einem löslichen Farbstoff, der in einem Lösungsmittel, meist wasser, oder in einem Lösungsmittelgemisch gelöst ist. Die Lösung enthält in der Regel noch weitere Hilfsmittel, wie z.B. oberflächenaktive Substanzen, Feuchthaltemittel und/oder Konservierungsmittel.

Um Drucke hoher Qualität, d h. hoher Schärfe und Klarheit zu erhalten, müssen an Aufzeichnungsflüssigkeiten für das Tintenstrahl-Druckverfahren höchste Anforderungen bezüglich Reinheit und Partikelfreiheit gestellt werden. Insbesondere dürfen sie bei einem Stillstand der Düse an der Düsenöffnung keine Korrosion bewirken oder gar antrocknen und auch über längere Zeit nicht verkrusten. Diese und andere Forderungen bedingen, daß die zur Herstellung von Aufzeichnungsflüssigkeiten benutzten Farbstoffe praktisch keine Salze oder Stellmittel enthalten dürfen und eine hohe Löslichkeit aufweisen müssen. Weiterhin müssen Viskosität und insbesondere Oberflächenspannung innerhalb bestimmter Bereiche liegen, um eine optimale Tintentropfenbildung zu gewährleisten.

Trisazofarbstoffe, die denen der allgemeinen Formel I strukturell verwandt sind, sind bereits aus der deutschen Patentschrift 2 424 501 bekannt.

Diese ursprünglich für das Färben und Bedrucken von Textilmaterialien hergestellten Farbstoffe liegen insbesondere in Form ihrer Natriumsalze vor und enthalten üblicherweise von der Herstellung her beträchtliche Mengen an Salzen, wie z.B Natriumsulfat, Natriumacetat, insbesondere aber Natriumchlorid. Oft werden bei Textilfarbstoffen derartige Salze auch noch nach der Synthese als Streck- oder Stellmittel gezielt zugesetzt.

Solche salzhaltigen Farbstoffe sind zur Herstellung von Aufzeichnungsflüssigkeiten für das Tintenstrahl-Druckverfahren nicht geeignet, insbesondere weil Korrosion an den Düsen eintritt, aber auch aufgrund einer zu geringen Löslichkeit der Farbstoffe und einer schlechten Lagerstabilität, die mit Viskositätserhöhung und Farbstoffausscheidung verbunden ist.

Darüberhinaus ergeben sich Nachteile hinsichtlich der Oberflächenspannung, wodurch eine optimale Tintentropfenbildung beim Einsatz im Tintenstrahl-Druckverfahren verhindert wird.

Die für die Herstellung von Aufzeichnungsflüssigkeiten für das Tintenstrahlverfahren vorgesehenen Farbstoffe müssen daher zuerst aufwendigen und kostspieligen Reinigungsoperationen unterworfen werden, wie sie z.B. in DE-A-35 39 727 beschrieben sind.

Durch die vorliegende Erfindung werden Farbstoffe der allgemeinen Formel I zur Verfügung gestellt, die sich in wirtschaftlich vorteilhafter Weise auch in salzarmer Form herstellen lassen und die hervorragend für den Einsatz im Tintenstrahl-Druckverfahren geeignet sind. Gegenüber den in der deutschen Patentschrift 24 24 501 genannten Trisazofarbstoff-Natriumsalzen weisen die erfindungsgemäßen gemischten Natrium-/Lithiumsalze, insbesondere die Trilithiumsalze, eine höhere Löslichkeit auf. Darüberhinhaus bieten die aus den erfindungsgemäßen Farbstoffen hergestellten Aufzeichnungsflüssigkeiten Vorteile hinsichtlich Lagerstabilität, Viskosität und Oberflächenspannung.

Die erfindungsgemäßen Farbstoffe der allgemeinen Formel I stellen gemischte Natrium- und Lithiumsalze bzw. Lithiumsalze von Farbsäuren dar, die zwei Sulfogruppen und eine Carboxylgruppe im Molekül enthalten. Demgemäß beträgt die Summe der im Molekül vorhandenen Natrium- und Lithiumionen drei, wobei entsprechend der Bedeutung von n die Zahl der Natriumionen 0 bis 2,5 und die Zahl der Lithiumionen 3 bis 0,5 betragen kann.

Bevorzugt bedeutet n eine Zahl von 0 bis 1. Ganz besonders bevorzugt ist n = 0. Der Rest R kann in ortho-, meta- oder para-Stellung zur Diazogruppe stehen und bedeutet bevorzugt Methyl, Ethoxy und Acetylamino. Ganz besonders bevorzugt bedeutet R Wasserstoff.

Die erfindungsgemäßen Farbstoffe der allgemeinen Formel I können erfindungsgemäß dadurch hergestellt werden, daß ein diazotierter Disazofarbstoff der allgemeinen Formel II

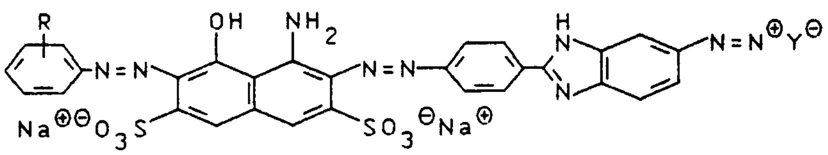

(II)

worin R die oben angegebene Bedeutung besitzt und $Y^{\ominus}$ für das Anion einer Mineralsäure steht, mit einer Mineralsäure bei sauren pH-Werten von 0 bis 3 in das schwerlösliche Betain-Salz der allgemeinen Formel III

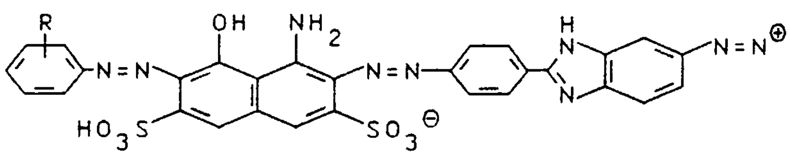

(III)

überführt, filtriert und mit Wasser elektrolytfrei gewaschen wird, anschließend das Betain-Salz der allgemeinen Formel III in wäßrigem Medium mit 3-Hydroxyphenylglycin der Formel IV

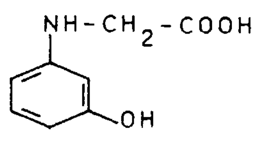

(IV)

vereinigt und durch Zugabe von Lithiumhydroxid und/oder Lithiumcarbonat oder von Mischungen dieser Lithium-Basen mit Natriumhydroxid und/oder Natriumcarbonat und/oder Natriumhydrogencarbonat bei pH-Werten von 6,5 bis 9,5 gekuppelt wird.

Vorzugsweise wird die Kupplung bei pH-Werten von 7 bis 8,5 ausgeführt. Die Temperaturen betragen normalerweise -10° bis +50°C, vorzugsweise 0 bis 20°C. Das wäßrige Reaktionsmedium kann auch organische Lösungsmittel, wie z.B. Alkohole, wie Methanol oder Ethanol, enthalten. Die Kupplung kann sowohl in Para-Stellung zur Hydroxygruppe, als auch in para-Stellung zum Glycinsubstituenten des 3-Hydroxyphenylglycins der Formel IV erfolgen. Die Verbindungen der allgemeinen Formel I liegen deshalb in der Regel als Gemisch der entsprechenden Isomeren vor.

In einem alternativen Verfahren werden Farbstoffe der allgemeinen Formel I dadurch hergestellt, daß ein gegebenenfalls elektrolythaltiger Trisazofarbstoff der allgemeinen Formel V

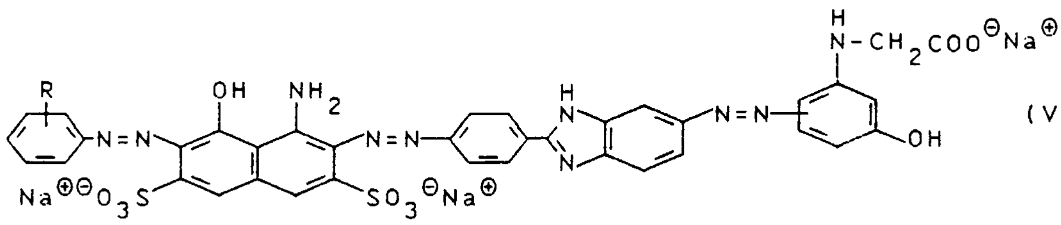

(V)

worin R die oben angegebene Bedeutung hat, mit einer Mineralsäure bei pH-Werten von 0 bis 3 in die schwerlösliche Farbstoffsäure der allgemeinen Formel VI

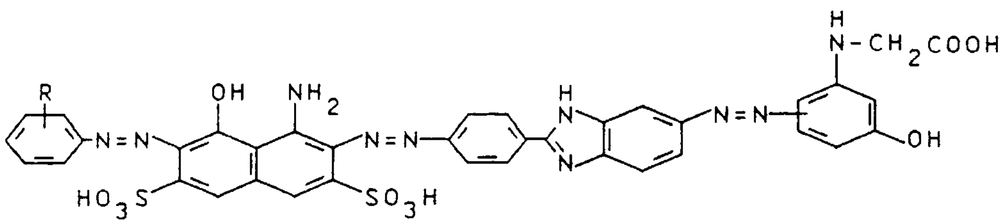

(VI)

überführt, mit Wasser elektrolytfrei gewaschen und anschließend in Wasser suspendiert und mit Lithiumhydroxid und/oder Lithiumcarbonat oder mit Mischungen dieser Lithiumbasen mit Natriumhydroxid und/oder Natriumcarbonat und/oder Natriumhydrogencarbonat neutralisiert wird.

Die oben angegebenen Mineralsäuren sind vorzugsweise Salzsäure und Schwefelsäure.

Die Zusammensetzungen der Lithium- und Natriumbasen werden so gewählt, daß nach der Zugabe in der den Farbstoff enthaltenden Lösung ein Verhältnis von $Na^{\oplus}:Li^{\oplus}$ = n: (3-n) vorhanden ist, wobei n eine Zahl von 0 bis 2,5 bedeutet.

Die Herstellung der diazotierten Disazofarbstoffe der allgemeinen Formel II sowie der Trisazofarbstoffe der allgemeinen Formel V ist bekannt und beispielsweise in der deutschen Patentschrift 24 24 501 beschrieben.

3-Hydroxyphenylglycin der Formel IV ist durch Kondensation von 3-Aminophenol mit Monochloressigsäure zugänglich.

Die gegebenenfalls durch Klärfiltration, z B. mit Aktivkohle, erhaltenen wäßrigen Lösungen der erfindungsgemäßen Trisazofarbsalze der allgemeinen Formel I können direkt für die Herstellung von Aufzeichnungsflüssigkeiten verwendet werden. Es ist aber auch möglich, sie zunächst durch Trocknung, z.B. Sprühtrocknung, zu isolieren und anschließend zu Aufzeichnungsflüssigkeiten weiterzuverarbeiten.

Die fertigen Aufzeichnungsflüssigkeiten enthalten im allgemeinen 0,5 bis 15 Gew.% Farbstoff (trocken gerechnet), 0 bis 99 Gew.% Wasser und 0,5 bis 99,5 Gew.% Lösungsmittel und/oder Feuchthaltemittel. Insbesondere enthalten die fertigen Aufzeichnungsflüssigkeiten 0,5 bis 15 Gew.% Farbstoff (trocken gerechnet), 40 bis 85 Gew.% Wasser und 15 bis 50 Gew.% Lösungsmittel und/oder Feuchthaltemittel. Die fertigen Aufzeichnungsflüssigkeiten enthalten in der Regel noch weitere, nachstehend erwähnte Zusätze.

Das zur Herstellung der Aufzeichnungsflüssigkeiten benutzte Wasser wird vorzugsweise in Form von destilliertem oder entsalztem Wasser eingesetzt. Neben Wasser kann in den Aufzeichnungsflüssigkeiten auch noch ein organisches wasserlösliches Lösungsmittel oder ein Gemisch derartiger Lösungsmittel vorhanden sein. Geeignete Lösungsmittel sind z.B. ein- und mehrwertige Alkohole, deren Ether und Ester, so z.B. Alkanole, insbesondere mit 1 bis 4C-Atomen, wie z.B. Methanol, Ethanol, Propanol, Isopropanol, Butanol, Isobutanol, tert.-Butanol; zwei- und dreiwertige Alkohole, insbesondere solche mit 2 bis 6 C-Atomen, z. B. Ethylenglykol, Propylenglykol, 1,3-Propandiol, 1,4-Butandiol, 1,5-Pentandiol, 1,6-Hexandiol, 1,2,6-Hexantriol, Glyzerin, Diethylenglykol, Dipropylenglykol; Polyalkylenglykole, wie z.B. Triethylenglykol, Polyethylenglykol, Tripropylenglykol, Polypropylenglykol; niedere Alkylether von mehrwertigen Alkoholen, wie z.B Ethylenglykol-mono-methyl-oder -ethyl- oder -propyl- oder -butyl-ether, Diethylenglykol-mono-methyl- oder -ethyl-ether, Triethylenglykol-mono-methyl- oder -ethyl-ether; Ketone und Ketoalkohole, insbesondere solche mit 3 bis 7 C-Atomen, wie z.B. Aceton, Methylethyl-keton, Diethyl-keton, Methyl-isobutyl-keton, Methylpentyl-keton, Cyclopentanon, Cyclohexanon, Diacetonalkohol; Ether, wie z.B. Dibutylether, Tetrahydrofuran, Dioxan, Ester, wie z.B. Ethylformiat, Methylformiat, Methylacetat, Ethylacetat, Propylenacetat, Butylacetat, Phenylacetat, Ethylglykolmono-ethylether-acetat, Essigsäure-2-hydroxy-ethylester; Amide, wie z.B Dimethylformamid, Dimethylacetamid, N-Methylpyrrolidon; ferner Harnstoff, Tetramethylharnstoff, Thiodiglykol.

Von den vorgenannten Substanzen wirken einige nicht nur als Lösungsmittel, sondern entfalten auch noch andere Eigenschaften. So wirken z.B. die mehrwertigen Alkohole auch als Feuchthaltemittel.

Weiter können den Aufzeichnungsmitteln zugesetzt sein: Konservierungsmittel, wie z.B. Phenol-Derivate, kationische, anionische oder nichtionische oberflächenaktive Substanzen (Netzmittel), sowie Mittel zur Regulierung der Viskosität, z.B. Polyvinylalkohol, Cellulosederivate, oder wasserlösliche natürliche oder künstliche Harze als Filmbildner bzw. Bindemittel zur Erhöhung der Haft- und Abriebfestigkeit.

Amine, wie z.B. Ethanolamin, Diethanolamin, Triethanolamin, N,N-Dimethylethanolamin, Diisopropylamin dienen hauptsächlich zur Erhöhung des pH-Wertes der Aufzeichnungsflüssigkeit. Sie sind in der Regel zu 0 bis 10 Gew.%, vorzugsweise 0,5 bis 5 Gew.% in der Aufzeichnungsflüssigkeit vorhanden.

Angaben über Zusammensetzungen von Tinten, insbesondere auch solchen für das Strahldruckverfahren, finden sich z.B. in DE-A-2 132 324, DE-A-2 160 475, USP 4 024 096, USP 4 024 397 und USP 4 070 322. Die genaue Zusammensetzung der Aufzeichnungsflüssigkeit wird selbstverständlich dem beabsichtigten Verwendungszweck angepaßt.

Bei Aufzeichnungsflüssigkeiten für das Tintenstrahl-Druckverfahren können je nach der Ausführungsform dieses Druckverfahrens, z.B. als Continuous-jet-, Intermittent-jet-, Impulse-jet- oder Compound-jet-Verfahren gegebenenfalls noch weitere Additive, z.B. zur Pufferung des pH-Wertes, zur Einstellung der elektrischen Leitfähigkeit, der spezifischen wärme, des thermischen Expansionskoeffizienten und der Leitfähigkeit zugesetzt werden.

Die Aufzeichnungsflüssigkeiten lassen sich in einfacher Weise durch Vermischen der Komponenten herstellen, was z.B so erfolgen kann, daß ein Farbstoff der Formel I in Wasser gelöst oder eine bei der Herstellung des Farbstoffs der Formel I anfallende wäßrige Lösung gegebenenfalls weiter mit Wasser verdünnt wird und daß dann die übrigen Zusatzkomponenten, wie Lösungsmittel etc., zugemischt werden.

Die einen oder mehrere Farbstoffe der Formel I enthaltenden Aufzeichnungsflüssigkeiten eignen sich hervorragend zum Einsatz bei Druck-, Vervielfältigungs-, Markierungs-, Schreib-, Zeichen-, Stempel- oder Registrierverfahren, insbesondere aber auch bei dem Tintenstrahl-Druckverfahren. Dabei werden schwarze Drucke von hoher Qualität erhalten, die eine hohe Schärfe und Brillianz sowie gute Wasser-, Licht-und Abriebfestigkeit besitzen. Die erfindungsgemäßen Farbstoffe sind ferner aus toxikologischen Gründen vorteilhaft.

Bei der Lagerung erfindungsgemäßer Tinten tritt keine Abscheidung von Niederschlägen auf; ferner tritt beim Tintenstrahldruck beim Einsatz der erfindungsgemäßen Tinten keine Verstopfung der Düsen auf. Es treten auch keine Änderungen der physikalischen Eigenschaften erfindungsgemäßer Tinten ein, wenn sie in einem Tintenstrahldrucker längere Zeit unter ständiger Rezirkulation oder intermittierend unter zwischenzeitiger Abschaltung des Tintenstrahldruckers angewandt werden.

Beispiel 1

295 g des nach 1a) erhaltenen salzarmen diazotierten Disazofarbstoffs werden mit 250 ml Wasser angerührt. Die erhaltene Suspension wird langsam zu der mit 5,3 g Natriumcarbonat, 3,7 g Lithiumcarbonat und 50 g Eis versetzten, nach 1b) hergestellten 3-Hydroxyphenylglycin-Lösung gegeben. Man läßt 1 h bei pH 7,5 bis 8 nachrühren und engt die Farbstofflösung im Vakuum bei 70 bis 80 °C bis zur Trockne ein. Man erhält 73,5 g eines schwarzen Farbstoffs der Formel

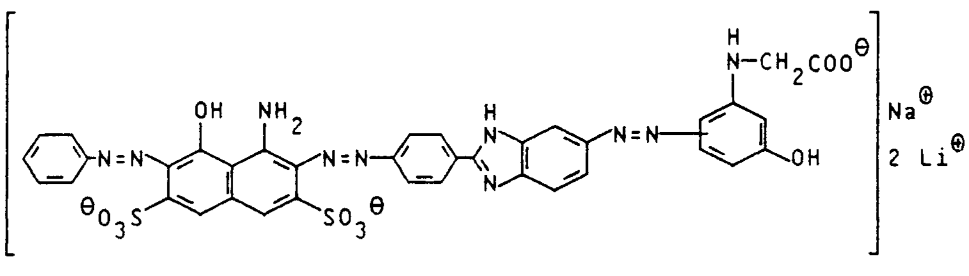

der sich hervorragend zur Herstellung von Aufzeichnungsflüssigkeiten für das Tintenstrahl-Druckverfahren eignet.

1a) Herstellung des diazotierten Disazofarbstoffs

30 g 1-Amino-8-hydroxy-naphthalin-3,6-disulfonsäure werden in 100 ml Wasser durch Zugabe von Natriumcarbonat so gelöst, daß die Lösung einen pH-Wert von 6,5 aufweist.

22,4 g 2-(4′-Aminophenyl)-5-(bzw.6)-aminobenzimidazol werden in einem Gemisch aus 200 ml Wasser und 50 ml 30%iger wäßriger Salzsäure unter Zugabe von Eis bei 0 bis 5 °C mit einer Lösung von 13,8 g Natriumnitrit in 50 ml Wasser tetrazotiert.

Nach der Zugabe der Natriumnitritlösung rührt man ca. 1 h bei 0 bis 5 °C nach und entfernt dann überschüssige salpetrige Säure mit Amidosulfonsäure. Die Lösung der 1-Amino-8-hydroxy-naphthalin-3,6-disulfonsäure wird darauf zu der mit Natriumacetatlösung auf pH 2 abgestumpften Lösung der Tetrazokomponente getropft und die halbseitige Kupplung durch Rühren bei 10 bis 15 °C und Zugeben von Natriumacetatlösung bis zu einem pH-Wert von 2,5 vervollständigt. Der mit Eis auf 0 bis 5 °C gekühlten Suspension des diazotierten Monoazofarbstoffs wird darauf eine in bekannter Weise aus 8,45 g Anilin, 25 ml 30%iger wäßriger Salzsäure und einer Lösung von 6,3 g Natriumnitrit in 20 ml Wasser bei 0 °C hergestellte Diazobenzollösung zugesetzt und mit 10%iger Natriumcarbonatlösung ein pH-Wert von 8,5 bis 9 eingestellt. Die Suspension des grünen diazotierten Disazofarbstoffs der Formel II (R = Wasserstoff, $Y^{\ominus}$ = $Cl^{\ominus}$) wird mit 70 ml 30%iger Salzsäure auf pH 1,5 gestellt, filtriert und mit 2 l Wasser choridfrei gewaschen.
Ausbeute: 295 g Preßkuchen

1b) Herstellung von 3-Hydroxyphenylglycin

9,2 g Monochloressigsäure werden in 40 ml Wasser eingetragen und mit 4,1 g Lithiumhydroxidmonohydrat in das Lithiumsalz überführt. Dann werden 10,4 g 3-Aminophenol zugegeben und 2 h bei 90 °C gerührt. Dann kühlt man auf 20 °C und stellt mit Natriumcarbonat auf pH 7.

Beispiel 2

Der nach Beispiel 1a hergestellten alkalischen Suspension des grünen, diazotierten Disazofarbstoffs wird eine analog Beispiel 1b), aber unter Verwendung von 4 g Natriumhydroxid statt 4,1 g Lithiumhydroxidmonohydrat, hergestellte Lösung von 3-Hydroxyphenylglycin zugesetzt.

Man läßt 3 h bei pH 8 bis 8,5 rühren, gibt 83 ml 30%ige Salzsäure bis zu einem pH von 1,5 zu und filtriert. Der Filterkuchen wird mit ca 2 l Wasser elektrolytfrei gewaschen und die erhaltene Farbsäure als feuchter Preßkuchen (530 g) in 1,7 l Wasser eingetragen. Nun wird mit ca. 12,6 g Lithiumhydroxidmonohydrat neutralisiert und bei 80 °C gelöst. Anschließend gibt man 8 g Aktiv-Kohle und 0,5 g eines Filtrierhilfsmittels zu, filtriert und engt die schwarze Farbstofflösung bis zur Trockne ein.

Man erhält 70 g eines schwarzen Farbstoffs der Formel

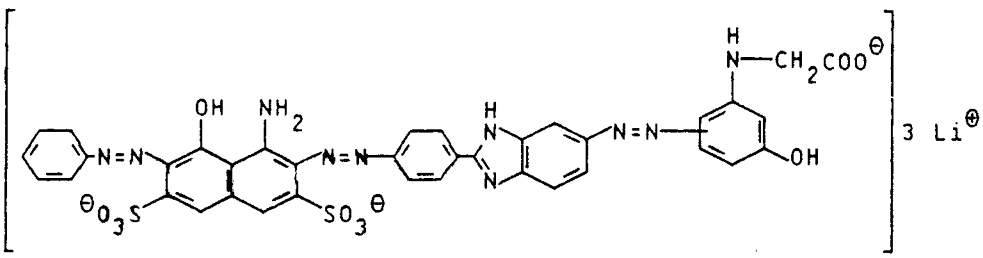

der sehr gut zur Herstellung von Aufzeichnungsflüssigkeiten für das Tintenstrahl-Druckverfahren geeignet ist.

Die folgende Tabelle 1 zeigt weitere Beispiele erfingemäßer schwarzer Trisazofarbstoffe der allgemeinen Formel I, die entsprechend den Angaben in Beispiel 1 bzw. 2 hergestellt werden können.

TABELLE 1

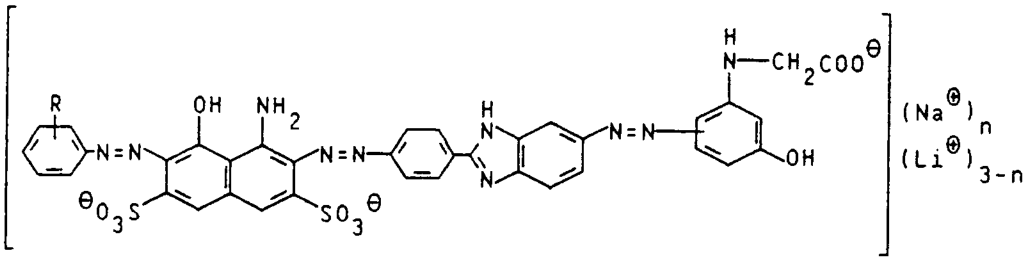

| Beispiel | R | n |
|---|---|---|
| 3 | H | 2 |
| 4 | H | 1,5 |
| 5 | Methyl | 0,5 |
| 6 | Ethoxy | 0 |
| 7 | Acetylamino | 0 |

Beispiel 8

Zur Prüfung der anwendungstechnischen Eigenschaften der erfindungsgemäßen Aufzeichnungsflüssigkeiten im Vergleich zu Aufzeichnungsflüssigkeiten mit bekannten schwarzen Farbstoffen werden verschiedene Tinten gemäß folgender Rezeptur hergestellt:

| | |
|---|---|
| 4 Gew.% | Farbstoff, |
| 4 Gew.% | Triethanolamin, |
| 77 Gew.% | Wasser (destilliert), |
| 15 Gew.% | Diethylenglykol. |

Der pH-Wert der Tinten beträgt je nach Farbstoff 8,5 bis 9,5.
Es wurde wie folgt geprüft:

1. Bestimmung der Thermostabilität

Eine 4%ige Tinte wird in zwei Proben geteilt. Eine Probe wird 4 Tage bei 90 °C in einem geschlossenen Gefäß gelagert, die andere bleibt unbehandelt. Gemessen wird nun die Farbtonabweichung der beiden Lösungen im L*a*b*-Farbraum nach DIN 6174. Die Farbtonabweichung wird in Δ E-Einheiten angegeben.

2. Bestimmung der Lichtechtheit

Die Lichtechtheiten wurden in der 4 % Farbstofflösung nach DIN 54004 gemessen. In der dabei benutzten Vergleichskala (blaue Wollskala) bedeutet die Note 1 eine sehr geringe und die Note 8 eine sehr gute Lichtechtheit.

3. Bestimmung der Viskosität

Die Viskositäten werden an einer Viscowaage der Firma Haake nach DIN 53015 bestimmt.

4. Bestimmung der Lagerstabilität

Die Tinten werden 4 Tage bei 90 °C in einem geschlossenen Gefäß und anschließend noch 3 Monate bei Raumtemperatur aufbewahrt. Beurteilt werden Ausfällungen (Bodensatz) sowie Auskristallisation am Flüssigkeitsrand nach folgender Klassifizierung:
1 = keine Auskristallisation
2 = Auskristallisation

5. Bestimmung der Oberflächenspannung

Die Oberflächenspannung der Tinten wurde mit einem Digital-Tensiometer der Firma Kryos nach der Ringmethode von Du Noüy und Wilhelmy bestimmt.

Die bei den vorstehend genannten Prüfungen erhaltenen Ergebnisse sind in der folgenden Tabelle zusammengefaßt:

| Farbstoff | Thermostab. Δ E | Lichtechtheit | Viskosität in m.Pa.S | Lagerstab. | Oberflächenspannung in dyn/cm |
|---|---|---|---|---|---|
| erfindungsgemäß nach Beispiel 2 | 0,22 | 3 - 4 | 2,5 | 1 | 54 |
| Stand der Technik: | | | | | |
| Food Black 1 | 58 (Zers.) | 3 | 2,6 | 2 | 51 |
| Food Black 2 | 0,8 | 3 | 2,9 | 2 | 45 |
| Trinatriumsalz des Farbstoffs gemäß Beispiel 2 | 0,35 | 3 - 4 | 3,2 | 2 | 48 |

Die Ergebnisse zeigen, daß die erfindungsgemäßen Farbstoffe dem Stand der Technik deutlich überlegen sind.

## Patentansprüche

**1.** Wasserlösliche schwarze Trisazofarbstoffe der allgemeinen Formel I

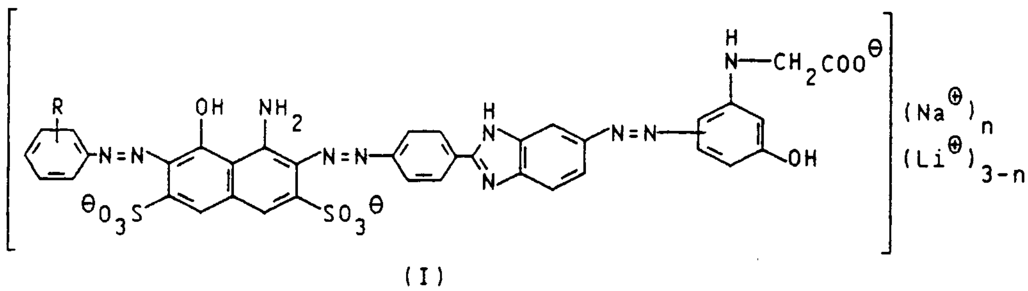

(I)

worin
R Wasserstoff, Alkyl mit 1 oder 2 Kohlenstoffatomen, Alkoxy mit 1 oder 2 Kohlenstoffatomen, Acylamino mit 2 oder 3 Kohlenstoffatomen oder Carbonamid und
n eine Zahl von 0 bis 2,5 bedeutet.

**2.** Trisazofarbstoff nach Anspruch 1, dadurch gekennzeichnet, daß R Wasserstoff bedeutet.

**3.** Trisazofarbstoff nach Anspruch 1 und/oder 2, dadurch gekennzeichnet, daß n eine Zahl von 0 bis 1

bedeutet.

4. Trisazofarbstoff nach einem oder mehreren der Ansprüche 1 bis 3, dadurch gekennzeichnet, daß n = 0 bedeutet.

5. Verfahren zur Herstellung von in den Ansprüchen 1 b 4 genannten Trisazofarbstoffen der allgemeinen Formel 1, dadurch gekennzeichnet, daß ein diazotierter Disazofarbstoff der allgemeinen Formel II

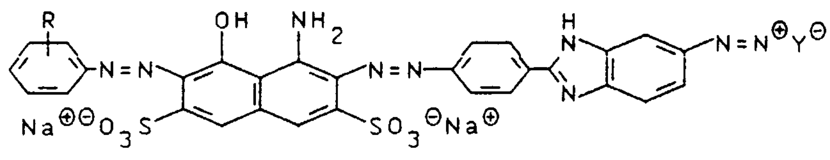

(II)

worin R die in Anspruch 1 angegebene Bedeutung besitzt und $Y^{\ominus}$ für das Anion einer Mineralsäure steht, mit einer Mineralsäure bei sauren pH-Werten von 0 bis 3 in das schwerlösliche Betain-Salz der allgemeinen Formel III

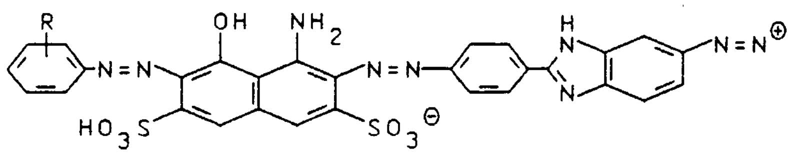

(III)

überführt, filtriert und mit Wasser elektrolytfrei gewaschen wird, anschließend das Betain-Salz der allgemeinen Formel III in wäßrigem Medium mit 3-Hydroxyphenylglycin der Formel IV

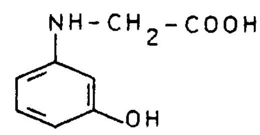

(IV)

vereinigt und durch Zugabe von Lithiumhydroxid und/oder Lithiumcarbonat oder von Mischungen dieser Lithium-Basen mit Natriumhydroxid und/oder Natriumcarbonat und/oder Natriumhydrogencarbonat bei pH-Werten von 6,5 bis 9,5 gekuppelt wird.

6. Verfahren zur Herstellung von in den Ansprüchen 1 bis 4 genannten Trisazofarbstoffen der allgemeinen Formel 1, dadurch gekennzeichnet, daß ein gegebenenfalls elektrolythaltiger Trisazofarbstoff der allgemeinen Formel V

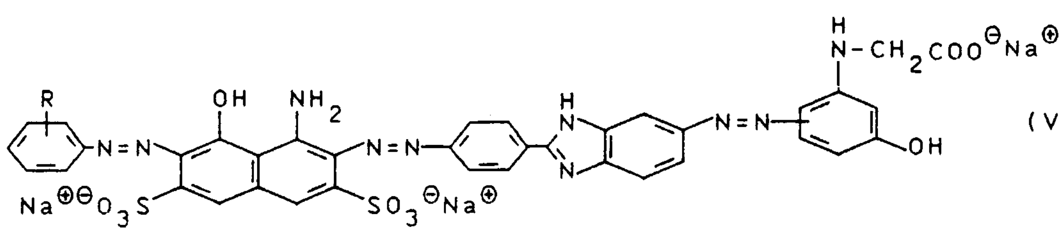

(V)

worin R die in Anspruch 1 angegebene Bedeutung hat, mit einer Mineralsäure bei pH-Werten von 0 bis 3 in die schwerlösliche Farbstoffsäure der allgemeinen Formel VI

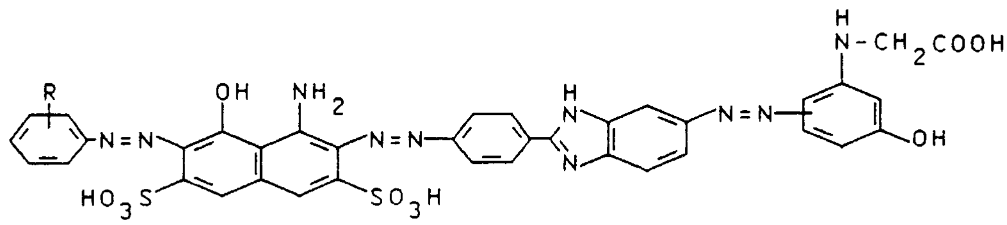

(VI)

überführt, mit Wasser elektrolytfrei gewaschen und anschließend in Wasser suspendiert und mit Lithiumhydroxid und/oder Lithiumcarbonat oder mit Mischungen dieser Lithiumbasen mit Natriumhydroxid und/oder Natriumcarbonat und/oder Natriumhydrogencarbonat neutralisiert wird.

7. Verwendung der in einem oder mehreren der Ansprüche 1 bis 4 angegebenen Farbstoffe der allgemeinen Formel I zur Herstellung von Aufzeichnungsflüssigkeiten.

8. Aufzeichnungsflüssigkeit, enthaltend 0,5 bis 15 Gew.% Farbstoff der in einem oder mehreren der Ansprüche 1 bis 4 angegebenen allgemeinen Formel I, 0 bis 99 Gew.% Wasser, 0,5 bis 99,5 Gew.% Lösungsmittel und/oder Feuchthaltemittel.

9. Aufzeichnungsflüssigkeit nach Anspruch 8, enthaltend 0,5 bis 15 Gew.% Farbstoff, 40 bis 85 Gew % Wasser, 15 bis 50 Gew.% Lösungsmittel und/oder Feuchthaltemittel.

## Claims

1. Water-soluble black trisazo dyestuffs of the general formula I

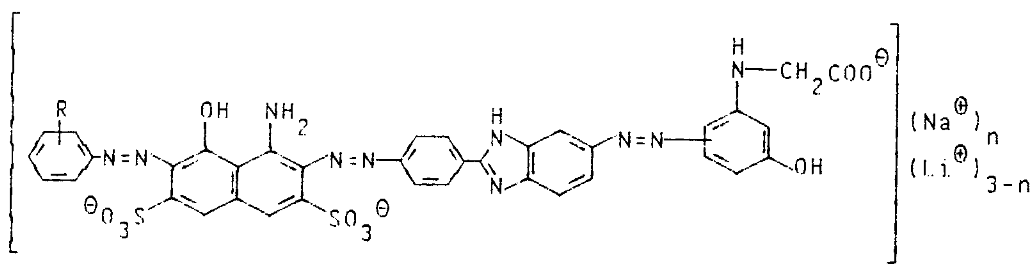

(I)

wherein R denotes hydrogen, alkyl having 1 or 2 carbon atoms, alkoxy having 1 or 2 carbon atoms, acylamino having 2 or 3 carbon atoms or carboxamide and n denotes a number from 0 to 2.5.

2. Trisazo dyestuff according to Claim 1, characterized in that R denotes hydrogen.

3. Trisazo dyestuff according to Claim 1 and/or 2, characterized in that n denotes a number from 0 to 1.

4. Trisazo dyestuff according to one or more of Claims 1 to 3, characterized in that n denotes 0.

5. Process for the preparation of trisazo dyestuffs of the general formula I mentioned in Claims 1 to 4, characterized in that a diazotized disazo dyestuff of the general formula II

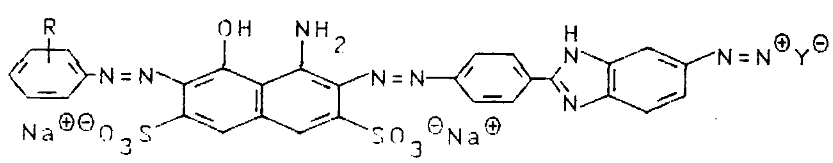

(II)

wherein R has the meaning given in Claim 1 and $Y^{\ominus}$ stands for the anion of a mineral acid, is converted into the sparingly soluble betaine salt of the general formula III

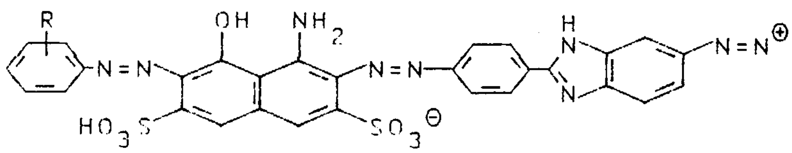

(III)

with a mineral acid at acid pH values of 0 to 3, the mixture is filtered and the product is washed free from electrolytes with water, and the betaine salt of the general formula III is then combined with 3-hydroxyphenylglycine of the formula IV

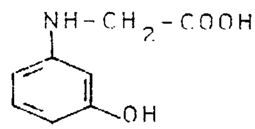

(IV)

in an aqueous medium and coupling is carried out by addition of lithium hydroxide and/or lithium carbonate or mixtures of these lithium bases with sodium hydroxide and/or sodium carbonate and/ or sodium bicarbonate at pH values of 6.5 to 9.5.

6. Process for the preparation of trisazo dyestuffs of the general formula I mentioned in Claims 1 to 4, characterized in that a trisazo dyestuff, optionally containing electrolytes, of the general formula V

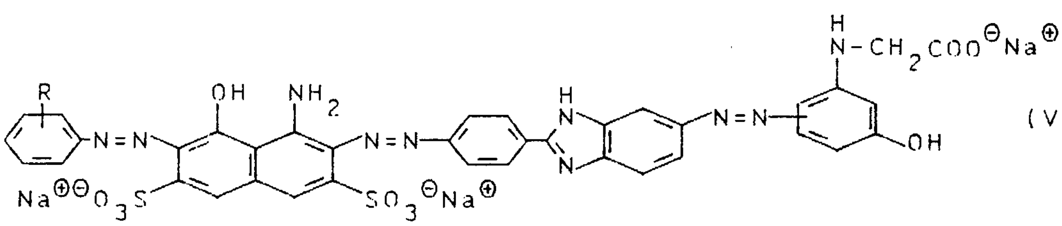

(V)

wherein R has the meaning given in Claim 1, is converted into the sparingly soluble dyestuff acid of the general formula VI

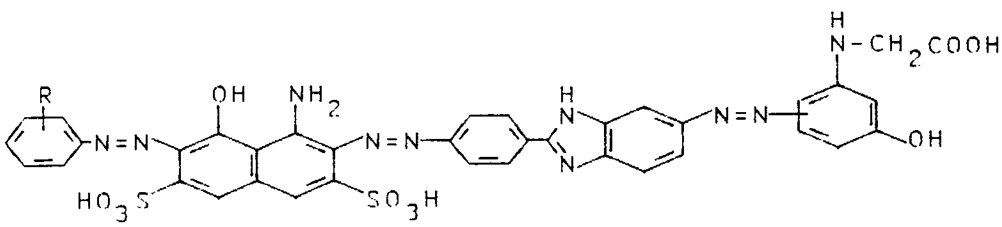

(VI)

with a mineral acid at pH values of 0 to 3, the product is washed free from electrolytes with water and then suspended in water and the suspension is neutralized with lithium hydroxide and/or lithium carbonate or with mixtures of these lithium bases with sodium hydroxide and/or sodium carbonate and/or sodium bicarbonate.

7. Use of the dyestuffs of the general formula I mentioned in one or more of Claims 1 to 4 for the preparation of recording fluids.

8. Recording fluid containing 0.5 to 15% by weight of dyestuff of the general formula I given in one or more of Claims 1 to 4, 0 to 99% by weight of water and 0.5 to 99.5% by weight of solvent and/or

humectant.

**9.** Recording fluid according to Claim 8, containing 0.5 to 15% by weight of dyestuff, 40 to 85% by weight of water and 15 to 50% by weight of solvent and/or humectant.

**Revendications**

**1.** Colorants trisazoïques noirs hydrosolubles, de formule générale I :

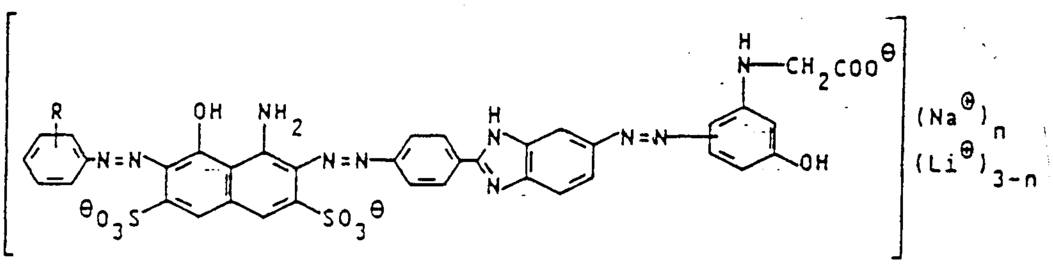

(I)

dans laquelle :
R représente un atome d'hydrogène, un groupe alkyle ayant 1 ou 2 atomes de carbone, alcoxy ayant 1 ou 2 atomes de carbone, acylamino ayant 2 ou 3 atomes de carbone, ou carboxamide, et
n est un nombre valant de 0 à 2,5.

**2.** Colorant trisazoïque selon la revendication 1, caractérisé en ce que R représente un atome d'hydrogène.

**3.** Colorant trisazoïque selon la revendication 1 et/ou 2, caractérisé en ce que n est un nombre valant de 0 à 1.

**4.** Colorant trisazoïque selon une ou plusieurs des revendications 1 à 3, caractérisé en ce que n est nul.

**5.** Procédé pour préparer des colorants trisazoïques de formule générale 1, cités dans les revendications 1 à 4, procédé caractérisé en ce qu'on soumet après diazotation un colorant disazoïque de formule générale II :

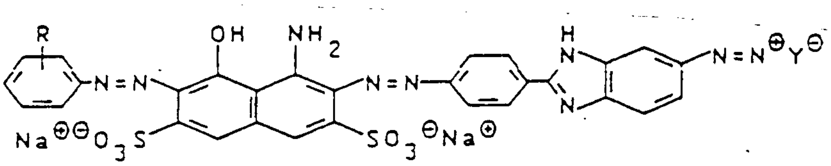

(II)

(dans laquelle R a le sens indiqué à la revendication 1 et $Y^-$ représente l'anion d'un acide minéral) à une transformation à l'aide d'un acide minéral, à des pH acides allant de 0 à 3, en le sel peu soluble de bétaïne de formule générale III :

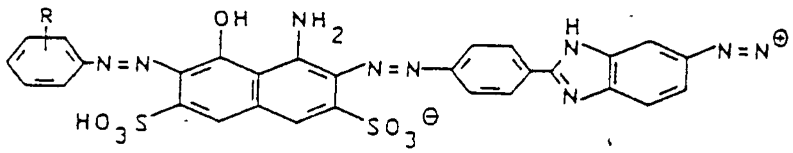

(III)

on filtre et on lave à l'eau jusqu'à absence d'électrolyte, puis l'on combine le sel de bétaïne de formule

générale III, en milieu aqueux, avec la 3-hydroxyphénylglycine de formule IV :

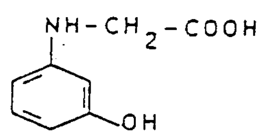

(IV)

et, par addition d'hydroxyde de lithium et/ou de carbonate de lithium ou de mélanges de ces bases dérivées du lithium avec de l'hydroxyde de sodium et/ou du carbonate de sodium et/ou de l'hydrogénocarbonate de sodium, on effectue une copulation à des pH de 6,5 à 9,5.

6. Procédé pour préparer des colorants trisazoïques de formule générale I, cités dans les revendications 1 à 4, procédé caractérisé en ce qu'on transforme un colorant trisazoïque, contenant éventuellement des électrolytes et répondant à la formule générale V :

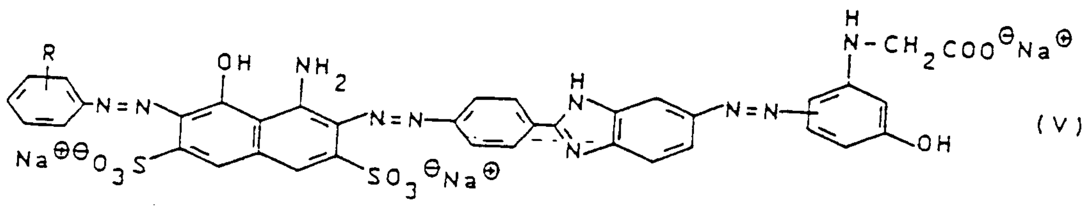

(V)

(dans laquelle R a le sens indiqué à la revendication 1) avec un acide minéral, à des pH de 0 à 3, en l'acide colorant peu soluble de formule générale VI :

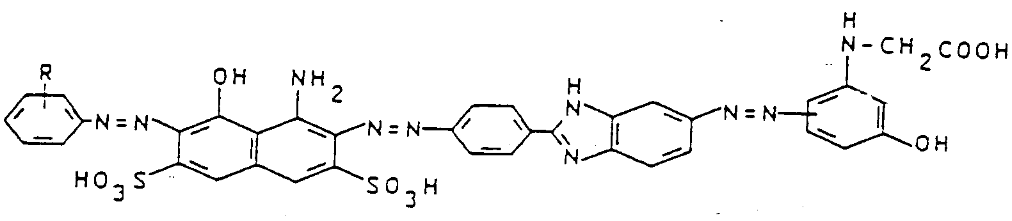

(VI)

on lave à l'eau jusqu'à absence d'électrolyte puis l'on met en suspension dans de l'eau et l'on neutralise avec de l'hydroxyde de lithium et/ou du carbonate de lithium ou avec des mélanges de ces bases dérivent du lithium avec l'hydroxyde de sodium et/ou le carbonate de sodium et/ou l'hydrogénocarbonate de sodium.

7. Utilisation des colorants de formule générale I, indiqués dans une ou plusieurs des revendications 1 à 4, pour préparer des liquides pour le dessin ou pour un enregistrement ou impression.

8. Liquide pour dessin, enregistrement ou impression, ce liquide contenant 0,5 à 15 % en poids d'un colorant répondant à la formule générale I indiqué dans une ou plusieurs des revendications 1 à 4, 0 à 99 % en poids d'eau 0,5 à 99,5 % en poids d'un solvant et/ou d'un produit pour la conservation de l'humidité.

9. Liquide pour dessin, enregistrement ou impression selon la revendication 8, ce liquide contenant 0,5 à 15 % en poids d'un colorant, 40 à 85 % en poids d'eau, 15 à 50 % en poids d'un solvant et/ou d'un produit pour la conservation de l'humidité.